# EUROPEAN PATENT SPECIFICATION

(11) **EP 3 156 983 B1**
(45) Date of publication and mention of the grant of the patent: **31.01.2018**
(21) Application number: 16163379.7
(22) Date of filing: 31.03.2016
(51) Int. Cl.: G08B 13/10, G08B 13/196

(54) **METHOD AND DEVICE FOR TRANSMITTING ALERT MESSAGE**
VERFAHREN UND VORRICHTUNG ZUR ÜBERTRAGUNG EINER ALARMNACHRICHT
PROCÉDÉ ET DISPOSITIF DE TRANSMISSION DE MESSAGE D'ALERTE

(30) Priority: 12.10.2015 CN 201510659383
(43) Date of publication of application: 19.04.2017
(73) Proprietor: Xiaomi Inc., Beijing 100085 (CN)
(72) Inventor: WU, Ke, 100085 BEIJING (CN); LIU, Xinyu, 100085 BEIJING (CN); LIU, Huayijun, 100085 BEIJING (CN)
(74) Representative: Underwood, Nicolas Patrick

(56) References cited:
- EP-A1- 1 744 289
- EP-A2- 1 968 023
- WO-A1-00/75417
- US-A1- 2005 179 553
- US-A1- 2007 237 358

## Description

### TECHNICAL FIELD

The present disclosure generally relates to computer technology field, and more particularly to a method and a device for transmitting an alert message.

### BACKGROUND

With the explosive development of the mobile terminal technology, the application of terminals is becoming increasingly wider, and is becoming more and more close to daily life. In daily life, people take it seriously in property safety. Therefore, people usually install a security door in their home to prevent others from entering their home to steal property.

The security door is provided with an alarm device. When someone attempts to destroy the security door in order to enter a house, the alarm device is triggered to transmit a high decibel alert.

However, when someone enters the house through other passage ways, such as a window, the security door would not be able to detect that someone entered the house. It may result in low safety of the property. Document EP1968023 discloses systems and methods which monitor weights applied within a protected premises and, based on detected weight pressure patterns, serve to control operational aspects of the premises.

### SUMMARY

In view of the problem in related arts, a method and a device for transmitting an alert message are provided in the disclosure.

According to a first aspect of the present disclosure, a method according to claim 1 is provided.

In an exemplary embodiment, the step of obtaining the physical characteristic data of the target object on the target device includes: detecting pressure, contact area and temperature of the target object on the target device; and determining the target object being a human and obtaining the physical characteristic data of the target object, if a preset physical characteristic condition is satisfied between the pressure, contact area and temperature of the target object.

As such, if the target object is not a human, it does not need to make subsequent processing, thereby to reduce the processing load for the target device.

Transmitting the first alert message to the first terminal, if the physical characteristic data of the target object do not match pre-stored physical characteristic data of the target user in the preset matching condition includes: determining a physical characteristic data range corresponding to the pre-stored physical characteristic data of the target user; and transmitting the first alert message to the first terminal, if the physical characteristic data of the target object is not within the physical characteristic data range.

As such, it can reduce a possibility of miscalculation.

The method further includes: obtaining motion data of the target user within a preset time period; and adjusting the physical characteristic data range based on the motion data.

The transmitting the first alert message to the first terminal, if the physical characteristic data of the target object is not within the physical characteristic data range includes: transmitting the first alert message to the first terminal, if the physical characteristic data of the target object is not within the adjusted physical characteristic data range.

As such, it can determine the change of the physical characteristic data range based on the motion of the user in order to avoid determining the user as a suspicious person.

In an exemplary embodiment, the method further includes: transmitting a preset control command to a controlled device.

In an exemplary embodiment, the transmitting the preset control command to the controlled device includes: transmitting the preset control command to a controlled device upon receiving an alarm confirmation message transmitted by the first terminal.

As such, it can avoid that friends and relatives of the user are determined as trespassers, thereby avoid incorrect processing.

In an exemplary embodiment, the transmitting the preset control command to the controlled device includes: transmitting a video recording command to a monitor device.

As such, it can effectively obtain information related to the trespasser.

In an exemplary embodiment, the transmitting the preset control command to the controlled device includes: transmitting a lock command to a security door and/or a security window.

As such, it may prevent the trespasser from escaping to some extent.

In an exemplary embodiment, the method further includes transmitting a second alert message to a background server of a local security network upon receiving the alarm confirmation message transmitted by the first terminal.

As such, it can notify security persons to catch the trespasser, thereby to improve the safety of the user's property.

In an exemplary embodiment, the transmitting the first alert message to the first terminal includes: obtaining terminal identifications of terminals currently accessing a local area network; and transmitting the first alert message to the first terminal, if the obtained terminal identifications does not contain a terminal identification of the first terminal.

The method further includes: obtaining terminal identifications of terminals currently accessing the local area network; and transmitting the first alert message to a preset second terminal, if the obtained terminal identifications contains a terminal identification of the first terminal and the preset second terminal being in an active state.

As such, when the user is in home, the other terminals may be used to remind the user to obtain the alert as soon as possible.

According to a second aspect of the present disclosure, a device for transmitting an alert message according to claim 5 is provided. In an exemplary embodiment, the first obtaining module is configured to: detect pressure, contact area and temperature of the target object on the target device; and determine the target object being a human and obtain the physical characteristic data of the target object, if a preset physical characteristic condition is satisfied between the pressure, contact area and temperature of the target object.

The first transmitting module includes: a determining sub-module configured to determine a physical characteristic data range corresponding to the pre-stored physical characteristic data of the target user; and a transmitting sub-module configured to transmit the first alert message to the first terminal, if the physical characteristic data of the target object is not within the physical characteristic data range.

The device further includes: a second obtaining module configured to obtain motion data of the target user within a preset time period; and adjust the physical characteristic data range based on the motion data.

In an exemplary embodiment, the first transmitting module is configured to transmit the first alert message to the first terminal, if the physical characteristic data of the target object is not within the adjusted physical characteristic data range.

In an exemplary embodiment, the device further includes: a second transmitting module configured to transmit a preset control command to a controlled device.

In an exemplary embodiment, the second transmitting module is configured to transmit the preset control command to the controlled device upon receiving an alarm confirmation message transmitted by the first terminal.

In an exemplary embodiment, the second transmitting module is configured to transmit a video recording command to a monitor device.

In an exemplary embodiment, the second transmitting module is configured to transmit a lock command to a security door and/or a security window.

In an exemplary embodiment, the device further includes a third transmitting module configured to transmit a second alert message to a background server of a local security network upon receiving the alarm confirmation message transmitted by the first terminal.

In an exemplary embodiment, the first transmitting module is configured to obtain terminal identifications of terminals currently accessing a local area network; and transmit the first alert message to the first terminal, if the obtained terminal identifications do not contain a terminal identification of the first terminal.

The first transmitting module is further configured to obtain terminal identifications of terminals currently accessing the local area network; and transmit the first alert message to a preset second terminal, if the obtained terminal identifications contain a terminal identification of the first terminal and the preset second terminal being in an active state.

According to a third aspect of the present disclosure, a device for transmitting an alert message according to claim 10 is provided.

Embodiments of the disclosure may provide the following beneficial effects: by obtaining physical characteristic data of a target object on a target device; and transmitting a first alert message to a first terminal, if a preset matching condition is not satisfied between the physical characteristic data of the target object and pre-stored physical characteristic data of a target user, when the other people is on the target device except for the target user, it would trigger the first terminal to transmit the first alert message, thereby to improve the safety of the target user's property.

It should be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for transmitting an alert message according to an exemplary embodiment.
Fig. 2 is a schematic diagram illustrating an application scenario according to an exemplary embodiment.
Fig. 3a-3d are schematic diagrams illustrating application scenarios according to exemplary embodiments.
Fig. 4 is a schematic diagram illustrating an application scenario according to an exemplary embodiment.
Fig. 5a-5b are schematic diagrams illustrating application scenarios according to exemplary embodiments.
Fig. 6 is a schematic diagram illustrating an application scenario according to an exemplary embodiment.
Fig. 7 is a schematic diagram illustrating a device for transmitting an alert message according to an exemplary embodiment.
Fig. 8 is a schematic diagram illustrating a device for transmitting an alert message according to an exemplary embodiment.
Fig. 9 is a schematic diagram illustrating a device for transmitting an alert message according to an exemplary embodiment.
Fig. 10 is a schematic diagram illustrating a device for transmitting an alert message according to an exemplary embodiment.
Fig. 11 is a schematic diagram illustrating a device for transmitting an alert message according to an exemplary embodiment.
Fig. 12 is a structural schematic diagram illustrating a target device according to an exemplary embodiment.

The above figures have illustrated specific embodiments of the disclosure, the more detailed description will be provided hereinafter. These figures and word description are not intend to limit the scope of the disclosure in any manner, but just describe the concept of the disclosure to those skilled in the art by referring to the specific embodiments.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

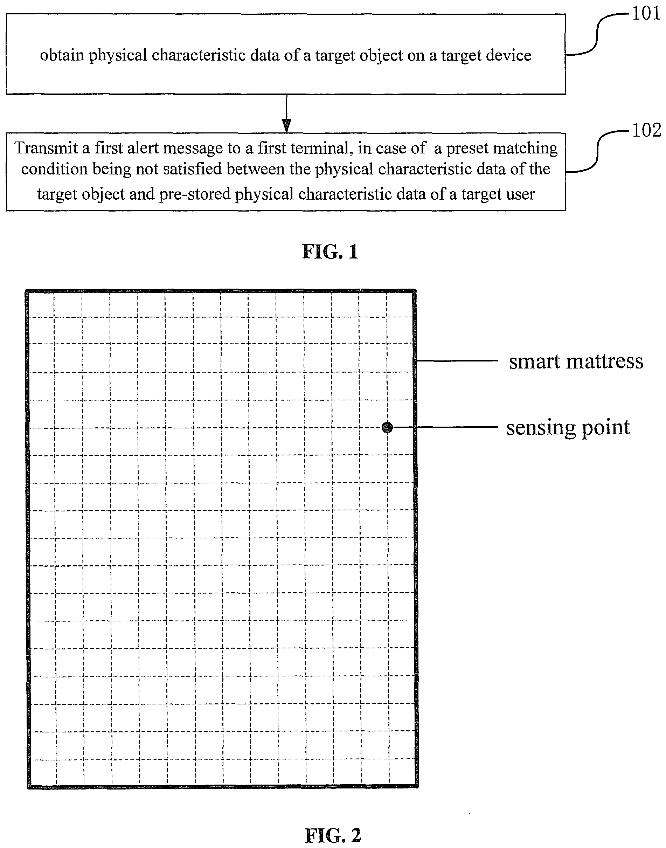

An exemplary embodiment of the disclosure provides a method for transmitting an alert message. As shown in Fig. 1, the method may include the following steps.

In step 101, physical characteristic data of a target object on a target device is obtained.

In step 102, a first alert message is transmitted to a first terminal, if a preset matching condition is not satisfied between the physical characteristic data of the target object and pre-stored physical characteristic data of a target user.

In the embodiment of the disclosure, by obtaining physical characteristic data of a target object on a target device; and transmitting a first alert message to a first terminal, if a preset matching condition is not satisfied between the physical characteristic data of the target object and pre-stored physical characteristic data of a target user, when the other people is on the target device except for the target user, it would trigger the first terminal to transmit the first alert message, thereby to improve the safety of the target user's property.

Another exemplary embodiment of the disclosure provides a method for transmitting an alert message. The method can be used in the target device, wherein the target device may be a device which can carry people, such as a smart mattress, a smart chair or a smart floor, or the like. The embodiment takes a mattress as the target device to make description. The target device may include a sensor, a processor and a memory. The sensor is used to obtain physical characteristic data of a target object on a target device; the processor is used to determine whether a preset matching condition is satisfied between the physical characteristic data of the target object and pre-stored physical characteristic data of a target user; and the memory is used to store data required by the above processing, data generated by the above processing and physical characteristic data of a target user. The target device may also include a transceiver. The transceiver is used to transmit an alert message to a terminal or transmit a control command to a controlled device. The target device may further include a power supply, or the like.

The processing flow illustrated in Fig. 1 will be described in detail in conjunction with the implementation.

In step 101, physical characteristic data of a target object on a target device is obtained.

The physical characteristic data may be able to reflect physical characteristics of a human, wherein the physical characteristic data may include pressure data, contact area data, temperature data and weight data, or the like.

In an embodiment, a smart mattress may be provided with a plurality of sensing points, wherein each of the plurality of sensing points is configured with a sensor, such as a pressure sensor and a temperature sensor, or the like. These sensing points can be evenly distributed on the smart mattress, as shown in Fig. 2. When there is a target object (e.g. a thing or a person) on the smart mattress, the physical characteristic data of the target object on the smart mattress may be detected via the sensors, such as the pressure on the mattress applied by the target object may be detected via the pressure sensor. The smart mattress may further calculate the weight of the target object through the detected pressure data, thereby to obtain the weight data of the target object. Furthermore, when the smart mattress detects the pressure data of the target object, it may obtain and average a plurality of larger pressure data, and ignore smaller pressure data which are obtained from edges of the mattress.

The smart mattress may also detect a contact area data of the target object contacting the smart mattress. The smart mattress may count the number of the sensing points which have detected the physical characteristic data (referred to as "a first number"), then calculate a ratio between the first number and a total number of the sensing points. The smart mattress may obtain a total area of its own, and multiply the total area by the ratio to get the contact area data of the target object; or the smart mattress may pre-store an area of each sensing point, and multiply the area of each sensing point by the first number to get the contact area data of the target object. The area of each sensing point can be set in a variety of manners, for example, the total area of the smart mattress is divided by the total number of sensing sensors to get the area of each sensing point; or the area data of each sensing point may be set based on the position of the sensing point, for example, the areas of the sensing points which are located near to the center of an upper surface of the smart mattress are set to larger values, and the areas of the sensing points which are located at edges of the upper surface are set to smaller values. After the smart mattress detected the pressure data and the area data of the target object, the smart mattress then calculates a ratio between the pressure data and the area data to get a pressure intensity data of the target object.

Furthermore, the smart mattress may further detect a shape of the contact area of the target object. For example, the number of the sensing points of the smart mattress may be very large, and the smart mattress can determine the shape of the contact area of the target object based on positions of the sensing points that have detected the pressure data and/or the weight data.

Alternatively, it may determine whether the target object is a human. Accordingly, the step 101 is as following: detecting pressure, contact area and temperature of the target object on the target device; and determining the target object being a human and obtaining the physical characteristic data of the target object, if a preset physical characteristic condition is satisfied between the pressure, contact area and temperature of the target object.

In an embodiment, the smart mattress may pre-store a physical characteristic condition, wherein the physical characteristic condition may include a pressure range, a contact area range and a temperature range. For example, the pressure range of a person pressing on the smart mattress may be 500N∼2500N, the contact area range of the person contacting the smart mattress may be 10cm2∼1m2, and the temperature range may be 30°C∼37°C. Furthermore, the smart mattress may pre-store a pressure intensity range of a person applying on the smart mattress. The smart mattress may detect the pressure, the contact area and the temperature of the target object on the smart mattress, then the smart mattress may determine whether the pressure of the target object falls into the pressure range of the person, the contact area of the target object falls into the contact area range of the person and the temperature of the target object falls into the temperature range of the person. The smart mattress may further determine whether the pressure intensity of the target object falls into the pressure intensity range of the person. When all the pressure, the contact area, the temperature and the pressure intensity of the target object fall into the corresponding ranges of the person, the target object is determined as a human, and then the physical characteristic data of the target object is obtained.

In step 102, when a preset matching condition is not satisfied between the physical characteristic data of the target object and pre-stored physical characteristic data of a target user, a first alert message is transmitted to a first terminal.

The first terminal may be a portable smart device, such as a mobile phone or a bracelet, or the like.

In an embodiment, the smart mattress may pre-store the physical characteristic data of the target user. The smart mattress may pre-store the pressure data and the contact area data, or the like of the target user who is located on the smart mattress in different postures. The smart mattress may also detect pressure data and contact area data and calculate the pressure intensity data based on the detected pressure data and contact area data, and correspondingly store the calculated pressure intensity data. Furthermore, the smart mattress may also detect and store the position relationships among the plurality of contact areas and the shapes of the contact areas in the case of the human being in a certain posture; obtain the corresponding pressure data based on the position relationships among the plurality of contact areas and the shapes of the contact areas; and then perform the match.

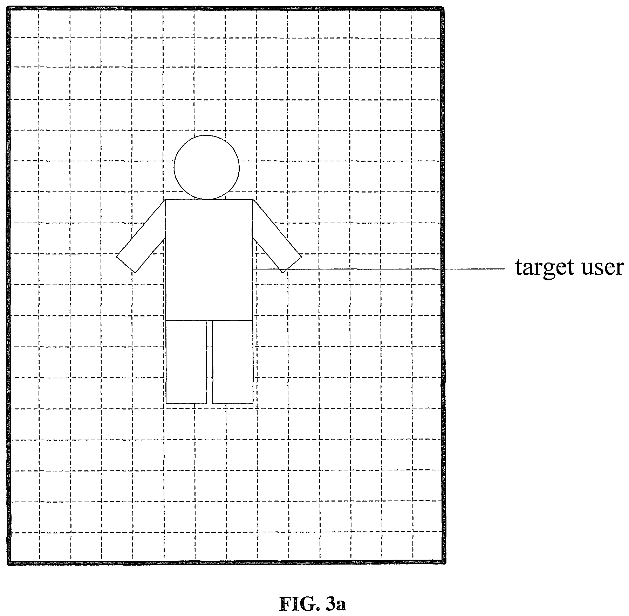

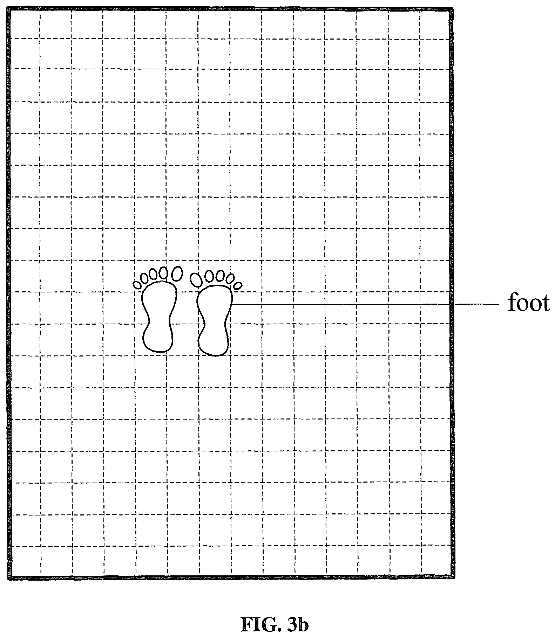

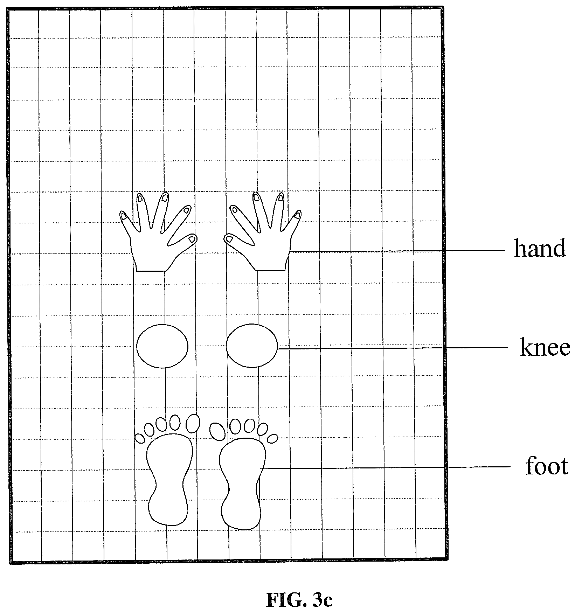

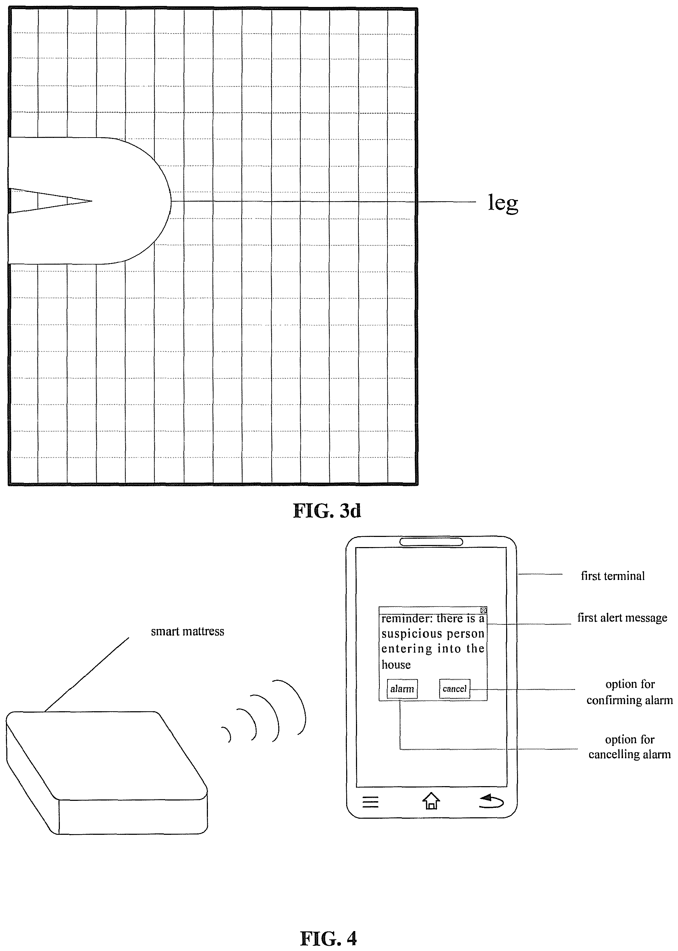

The pressure data, the contact area data and the pressure intensity data or the like detected under one posture may be referred to as a set of physical characteristic data. For example, the pressure data, the contact area data and the shapes of contact areas may be detected and stored when the target user lies flat on the smart mattress, as shown in Fig. 3a. The pressure data, contact area data and shapes of contact areas may be detected and stored when the target user stands on the smart mattress, as shown in Fig. 3b, wherein the detected position relationship between two contact areas is that a distance between the two contact areas is less than double the length of a leg. The pressure data, contact area data and shapes of contact areas may also be detected and stored when the target user lies prone on the smart mattress, as shown in Fig. 3c, wherein the detected position relationships among four contact areas are that distances between hands and foots are less than the height of the target user. The physical characteristic data of the target user may also be detected and stored when the target user sits on the smart mattress, as shown in Fig. 3d. Furthermore, the postures of the target user may include a posture of the target user standing on the smart mattress with one foot, a posture of the target user contacting the mattress with two foots and one hand, or a posture of the target user contacting the mattress with one hand and two foots, or the like.

The smart mattress may pre-store the physical characteristic data which is detected in the case of the persons having different heights and weights locating on the smart mattress in different postures. The target user may input his/her height and weight into a control component of the smart mattress, and the smart mattress may calculate corresponding physical characteristic data when the target user locates on the smart mattress in different postures based on the height and weight of the target user and the pre-stored physical characteristic data which is detected in the case of the persons having different heights and weights locating on the smart mattress in different postures. Furthermore, the target user may also make different postures on the smart mattress, and the smart mattress then may detect and store corresponding physical characteristic data.

After obtaining the physical characteristic data of the target object, the smart mattress may compare the physical characteristic data to multiple sets of physical characteristic data of the target user to calculate the difference between them, and may respectively calculate the difference for each type of data if the physical characteristic data includes multiple kinds of data. If all the calculated differences were less than the preset thresholds, it would be determined that the matching condition is satisfied between the physical characteristic data of the target object and that of the target user(that is, the target object is the target user), the first alert message may not be transmitted to the first terminal; if all of the calculated differences were not less than the preset thresholds, it would be determined that the matching condition is not satisfied between the physical characteristic data of the target object and that of the target user (that is, the target object is not the target user), the first alert message may be transmitted to the first terminal. The first alert message may be in a variety of forms, such as a form of short message, and a form of push message. The first alert message may be used to remind the user that there is a suspicious person currently entering into the house, as shown in Fig. 4.

Alternatively, the physical characteristic data range may be used to make a determination. Accordingly, the step 102 is as following: determining the physical characteristic data range corresponding to the pre-stored physical characteristic data of the target user; transmitting the first alert message to the first terminal if the physical characteristic data of the target object does not fall into the physical characteristic data range.

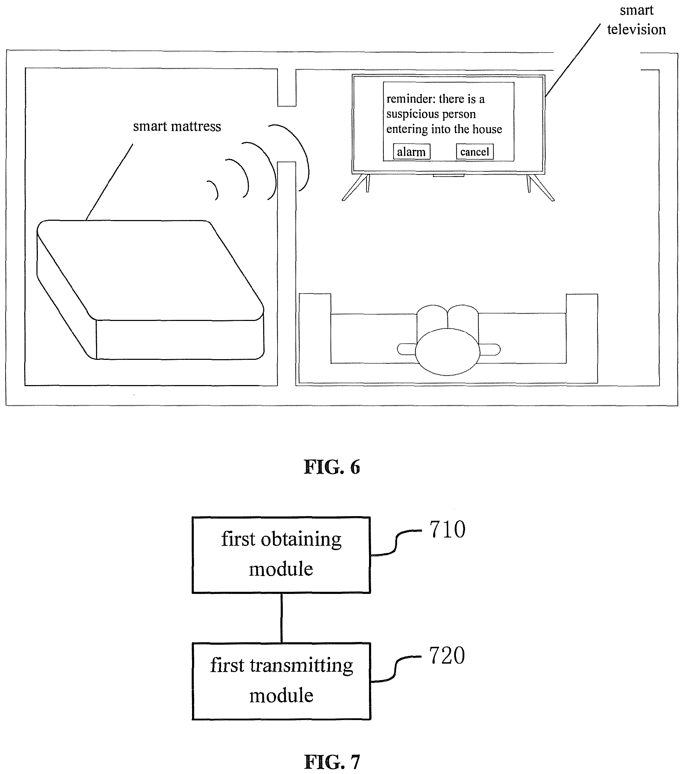

In an embodiment, after obtaining the physical characteristic data of the target user, the smart mattress may determine and store the physical characteristic data range corresponding to the physical characteristic data of the target user. For example, the pressure data of the target user is 800N, and then the corresponding pressure range may be determined as 790N∼810N. After obtaining the physical characteristic data of the target object, the smart mattress may determine whether the physical characteristic data of the target object falls into the above physical characteristic data range. If the physical characteristic data includes multiple kinds of data, it may respectively determine whether each kind of data falls into the corresponding the physical characteristic data range of the target user. For example, it may respectively determine whether the pressure data falls into the pressure range of the target user, and the contact data falls into the contact area range of the target user. If all of the data included in the physical characteristic data fell into the corresponding physical characteristic data range, it would be determined that the matching condition is satisfied between the physical characteristic data of the target object and that of the target user satisfy, the first alert message may not be transmitted to the first terminal; if all of the data included in the physical characteristic data did not fall into the corresponding physical characteristic data range, it would be determined the matching condition is not satisfied between the physical characteristic data of the target object and that of the target user, the first alert message may be transmitted to the first terminal. The first alert message may be in a variety of forms, such as a form of short message, and a form of push message. The first alert message may be used to remind the user that there is a suspicious person currently entering into the house, as shown in Fig. 6.

Alternatively, the physical characteristic data range may be adjusted based on the motion of the user. The corresponding processing procedures are as following: obtaining motion data of the target user within a preset time period; and adjusting the physical characteristic data range based on the motion data.

In an embodiment, the smart mattress may obtain motion data of the target user within a preset time period. The motion data may include motion time period, motion category and motion intensity, or the like. The smart mattress may obtain the motion data of the target user through a wearable smart device (e.g. a smart bracelet), and the target user may input the motion data through an input component of the smart mattress. The smart mattress may set different weighted values for different motions, for example, a running motion corresponds to a weighted value 5, a walking motion corresponds to a weighted value 2, a sit-up motion corresponds to a weighted value 4, and an equipment exercise motion corresponds to a weighted value 3. The smart mattress may multiply the motion time period of each motion by its corresponding weighted value and the motion intensity, to obtain a total motion value of the target user within the preset time period. The smart mattress may preset a corresponding relation between a motion value and an adjusted value of the physical characteristic data range, and then determine an adjusted value of the physical characteristic data range corresponding the total motion value. The adjusted value may be a particular value or a ratio. For example, the target user has a weight data range of 70kg∼72kg, a total motion value 550 and a corresponding adjusted value -2kg of physical characteristic data range, then it can be determined that the adjusted weight data range is 68kg∼70kg,

Alternatively, for the forgoing adjusted physical characteristic data range, the step 102 is as following: sending the first alert message to the first terminal in cased of the physical characteristic data of the target object not falling into the adjusted physical characteristic data range.

Alternatively, the smart mattress may further transmit a preset control command to a controlled device when it is determined that the target object is the target user.

In an embodiment, the controlled device may be a security device, such as a security door and a security window, or the like; a monitor device, such as a camera, a voice recording device, or the like; or a device possessing display function, such as a smart television, a tablet computer, or the like. After determining that a matching condition being not satisfied between the physical characteristic data of the target object and the pre-stored physical characteristic data of a target user, the smart mattress may transmit the preset control command to the controlled device to improve the safety of user's property.

Alternatively, the target user may determine whether to transmit the control command. The correspondingly processing procedure is as following: transmitting a preset control command to a controlled device upon receiving an alarm confirmation message transmitted by the first terminal.

In an embodiment, the smart target may transmit a first alert message to a first terminal (e.g. a mobile phone or a bracelet) when it determined that the preset matching condition is not satisfied between the physical characteristic data of the target object and the pre-stored physical characteristic data of the target user. The first alert message may contain an option of confirming alarm and an option of cancelling alarm. The target user may decide whether to make alarm after seeing the first alert message. If the target user decides to make alarm, the target user may click the option of confirming alarm, a target terminal can transmit a message for confirming alarm to the smart mattress, and the smart mattress may transmit the preset control command to the controlled device upon receiving the alarm confirmation message. If the target user decides to cancel alarm, the target user may click the option of cancelling alarm, the target terminal can transmit a message for cancelling alarm to the smart mattress, and the smart mattress may not transmit the preset control command to the controlled device upon receiving the alarm confirmation message.

Alternatively, the controlled device may be a monitor device, the corresponding processing procedure is as following: transmitting a video recording command to the monitor device.

In an embodiment, the smart target may transmit the video recording command to the monitor device through a Bluetooth or a router when it determined that the preset matching condition is not satisfied between the physical characteristic data of the target object and the pre-stored physical characteristic data of the target user. The monitor device may record and store a video after receiving the video recording command.

Alternatively, the controlled device may be a security door and/or a security window, the corresponding processing procedure is as following: transmitting a lock command to the security door and/or the security window.

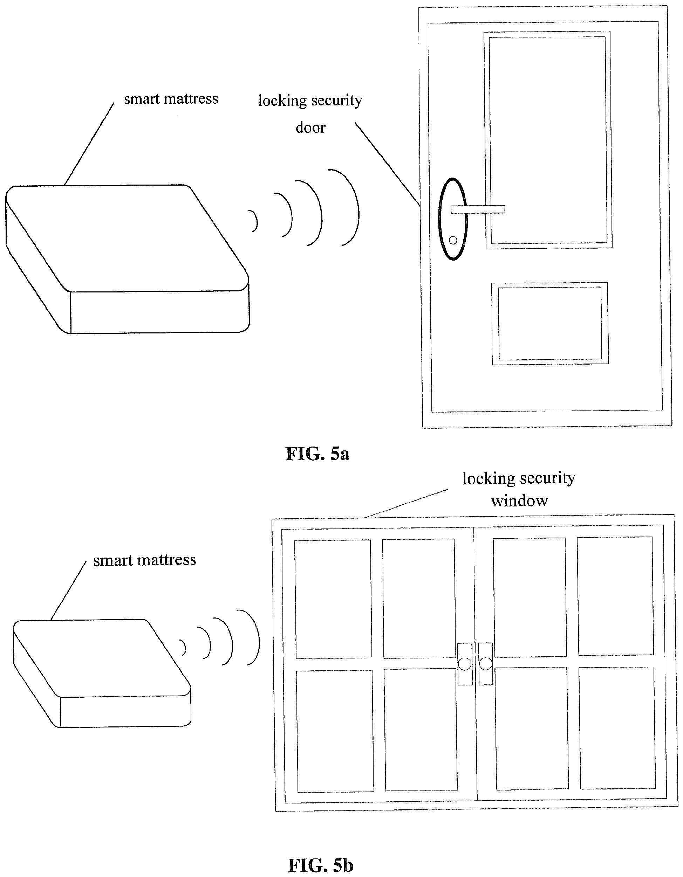

In an embodiment, the smart target may transmit the lock command to the security door and the security window through the Bluetooth or the router when it determined that the preset matching condition is not satisfied between the physical characteristic data of the target object and the pre-stored physical characteristic data of the target user. The security door and the security window may trigger the lock function upon receiving the lock command. At this time, the person who is in the house cannot leave the house through the security door and the security window, as shown in Fig. 5a and 5b.

Alternatively, an alert message may be transmitted to a security network. The corresponding processing procedure is as following: transmitting a second alert message to a background server of a local security network upon receiving the alarm confirmation message transmitted by the first terminal.

In an embodiment, a residential quarter that the target user resides may be configured with the security network. The user of the residential quarter can transmit the alert message through the security network. Upon receiving the alarm confirmation message transmitted by the first terminal, the smart mattress may obtain an identification of the local security network and transmit the second alert message to the background server of the local security network. The second alert message may be an alert message that is generated based on a preset protocol, which may contain a location identification, wherein the location identification may be a network address or a pre-stored residential quarter address (e.g. a building number and an apartment number). The security network may transmit an alert reminder to the corresponding terminal based on the pre-stored terminal identification after receiving the second alert message, wherein the terminal may be a terminal used by a security guard of the residential quarter, such as a mobile phone or a computer, or the like.

Alternatively, it may first determine whether the target user is in home before transmitting the alert message. Accordingly, the step 102 is as following: obtaining terminal identifications of terminals currently accessing a local area network; and transmitting the first alert message to the first terminal, if the obtained terminal identifications does not contain a terminal identification of the first terminal.

In an embodiment, the smart mattress may transmit a request for obtaining the terminal identification to the router of the local area network; the router may transmit the terminal identifications of terminals currently accessing the local area network to the smart mattress after receiving the request for obtaining the terminal identification; then the smart mattress may look for the terminal identification of the first terminal in the received terminal identifications; if the received terminal identifications do not contain the terminal identification of the first terminal, it means that the target user is not in home, and the first alert message may be transmitted to the first terminal.

Alternatively, in the case of the target user being in home, the corresponding processing procedure is as following: obtaining terminal identifications of terminals currently accessing the local area network; and transmitting the first alert message to a preset second terminal, if the obtained terminal identifications contain a terminal identification of the first terminal and the preset second terminal being in an active state.

In an embodiment, the smart mattress may look for the terminal identification of the first terminal in the received terminal identifications; if the received terminal identifications contain the terminal identification of the first terminal, it means that the target user is in home, and then it may determine whether the second terminal is in an active state. The second terminal may be other terminals possessing display function or voice reminding function except for the first terminal. The second terminal may be a smart television, a tablet computer or a smart air conditioning, or the like. The smart mattress may transmit a querying command to the second terminal through the Bluetooth component; if a feedback message from the second terminal is received, it may determine that the second terminal is in the active state. The smart mattress may transmit the first alert message to the second terminal after determining that the second terminal being in the active state; after receiving the first alert message, the second terminal may display contents of the first alert message, or play the contents of the first alert message in the manner of playing voice signal, as shown in Fig. 6.

In the embodiments of the disclosure, the physical characteristic data of the target object on the target device is obtained; the first alert message is transmitted to the first terminal, if the physical characteristic data of the target object does not match the pre-stored physical characteristic data of the target user in the preset matching condition. As such, when the other people is on the target device except for the target user, it would trigger the first terminal to transmit the first alert message, thereby to improve the safety of the target user's property.

Another exemplary embodiment of the disclosure further provides a device for transmitting an alert message, as shown in Fig. 7. The device includes a first obtaining module 710 and a first transmitting module 720.

The first obtaining module 710 is configured to obtain physical characteristic data of a target object on a target device. The first transmitting module 720 is configured to transmit a first alert message to a first terminal, if a preset matching condition is not satisfied between the physical characteristic data of the target object and pre-stored physical characteristic data of a target user.

Alternatively, the first obtaining module 710 is configured to: detect pressure, contact area and temperature of the target object on the target device; and determine the target object being a human, and obtain the physical characteristic data of the target object, if a preset physical characteristic condition is satisfied between the pressure, contact area and temperature of the target object.

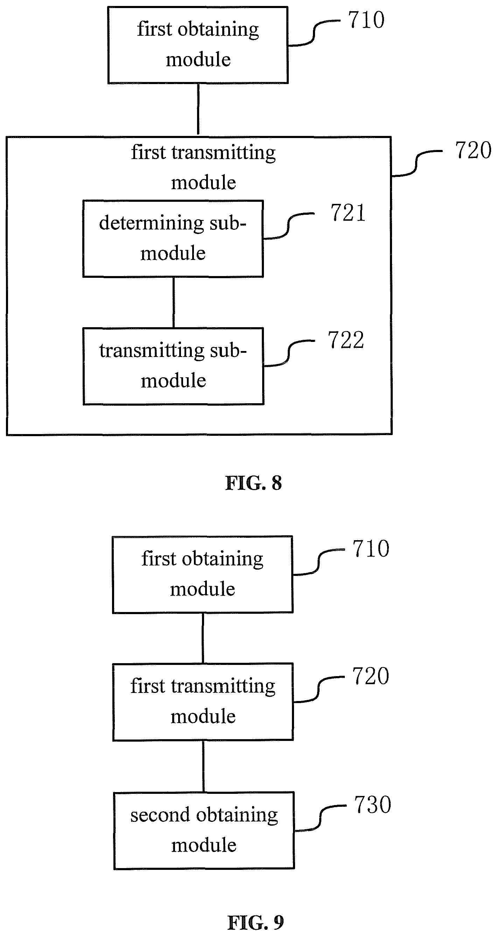

Alternatively, as shown Fig. 8, the first transmitting module 720 includes: a determining sub-module 721 configured to determine a physical characteristic data range corresponding to the pre-stored physical characteristic data of the target user; and a transmitting sub-module 722 configured to transmit the first alert message to the first terminal, if the physical characteristic data of the target object is not within the physical characteristic data range.

Alternatively, as shown Fig. 9, the device further includes a second obtaining module 730 configured to obtain motion data of the target user within a preset time period; and adjust the physical characteristic data range based on the motion data.

The first transmitting module 720 is configured to transmit the first alert message to the first terminal, if the physical characteristic data of the target object is not within the adjusted physical characteristic data range.

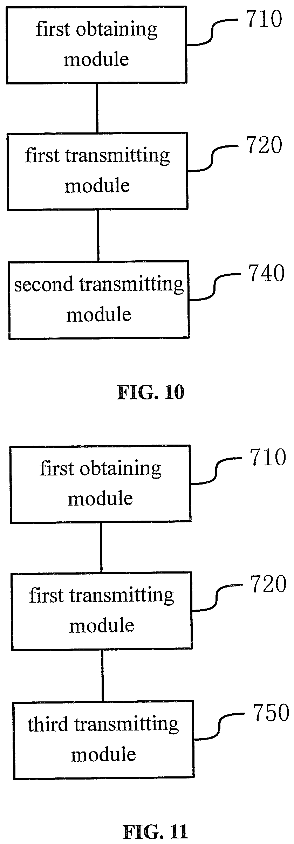

Alternatively, as shown Fig. 10, the device further includes a second transmitting module 740 configured to transmit a preset control command to a controlled device.

Alternatively, the second transmitting module 740 is configured to transmit the preset control command to the controlled device upon receiving an alarm confirmation message transmitted by the first terminal.

Alternatively, the second transmitting module 740 is configured to transmit a video recording command to a monitor device.

Alternatively, the second transmitting module 740 is configured to transmit a lock command to a security door and/or a security window.

Alternatively, as shown Fig. 11, the device further includes a third transmitting module 750 configured to transmit a second alert message to a background server of a local security network upon receiving the alarm confirmation message transmitted by the first terminal.

Alternatively, the first transmitting module 720 is configured to obtain terminal identifications of terminals currently accessing a local area network; and transmit the first alert message to the first terminal, if the obtained terminal identifications not containing a terminal identification of the first terminal.

For the devices of forgoing embodiments, the particular operations of each module have already been described in detail in the method embodiments, which are not repeated herein.

In the embodiments of the disclosure, the physical characteristic data of the target object on the target device is obtained; the first alert message is transmitted to the first terminal, if the physical characteristic data of the target object does not match the pre-stored physical characteristic data of the target user in the preset matching condition. As such, when the other people is on the target device except for the target user, it would trigger the first terminal to transmit the first alert message, thereby to improve the safety of the target user's property.

It should be noted that the device for transmitting the alert message provided in the forgoing embodiment is exemplarily described by using the above divided function modules when the device transmits the alert message; however, in practical applications, the above functions may be implemented by different function modules, that is, the inner structure of the device may be divided into different function modules to implement all or a part of the above functions. Furthermore, the above device embodiments belong to the same concept with the method embodiments, and the particular implementations have already been described in the method embodiment, which are not repeated herein.

Another exemplary embodiment of the disclosure provides a target device. The target device may be a smart mattress and so on.

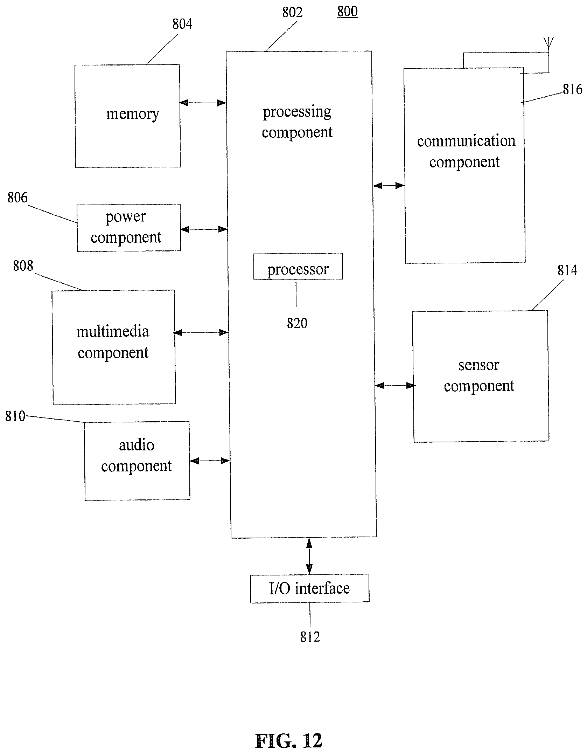

Referring to Fig. 12, the target device 800 may include include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the target device 800, such as the operations associated with display, telephone calls, data communications, camera operations, and recording operations. The processing component 802 may include one or more processors 820 to execute instructions to implementation all or part of the steps in the above described methods. Moreover, the processing component 820 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the target device 800. The power component 806 may include a power management system, one or more power sources, and any other components associated with the generation, management, and distribution of power for the target device 800.

The multimedia component 808 includes a screen providing an output interface between the target device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have optical focusing and zooming capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, the peripheral interface modules being, for example, a keyboard, a click wheel, buttons, and the like. The buttons may include, but are not limited to, a home button, a volume button, a starting button, and a locking button.

The sensor component 814 includes one or more sensors to provide status assessments of various aspects of the target device 800. For instance, the sensor component 814 may detect an open/closed status of the target device 800, relative positioning of components (e.g., the display and the keypad, of the target device 800), a change in position of the target device 800 or a component of the device 800, a presence or absence of user contact with the target device 800, an orientation or an acceleration/deceleration of the target device 800, and a change in temperature of the target device 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the target device 800 and other devices. The target device 800 can access a wireless network based on a communication standard, such as WiFi, 2G, or 3G, or a combination thereof. In an exemplary embodiment, the communication component 816 receives a broadcast signal or broadcast associated information from an external broadcast management system via a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the target device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the target device 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having stored therein instructions that, when executed by a processor of the target device, cause the target device to perform the above-described method, the method includes: obtaining physical characteristic data of a target object on a target device; and transmitting a first alert message to a first terminal, if a preset matching condition is not satisfied between the physical characteristic data of the target object and pre-stored physical characteristic data of a target user.

Alternatively, the obtaining the physical characteristic data of the target object on the target device includes: detecting pressure, contact area and temperature of the target object on the target device; and determining the target object being a human and obtaining the physical characteristic data of the target object, if a preset physical characteristic condition is satisfied between the pressure, contact area and temperature of the target object.

Alternatively, the transmitting the first alert message to the first terminal, if the physical characteristic data of the target object does not match pre-stored physical characteristic data of the target user in the preset matching condition includes: determining a physical characteristic data range corresponding to the pre-stored physical characteristic data of the target user; and transmitting the first alert message to the first terminal, if the physical characteristic data of the target object is not within the physical characteristic data range.

Alternatively, the method further includes: obtaining motion data of the target user within a preset time period; and adjusting the physical characteristic data range based on the motion data.

The transmitting the first alert message to the first terminal, if the physical characteristic data of the target object is not within the physical characteristic data range includes: transmitting the first alert message to the first terminal, if the physical characteristic data of the target object is not within the adjusted physical characteristic data range.

Alternatively, the method further includes: transmitting a preset control command to a controlled device.

Alternatively, the transmitting the preset control command to the controlled device includes: transmitting the preset control command to a controlled device upon receiving an alarm confirmation message transmitted by the first terminal.

Alternatively, the transmitting the preset control command to the controlled device includes: transmitting a video recording command to a monitor device.

Alternatively, the transmitting the preset control command to the controlled device includes: transmitting a lock command to a security door and/or a security window.

Alternatively, the method further includes transmitting a second alert message to a background server of a local security network upon receiving the alarm confirmation message transmitted by the first terminal.

Alternatively, the transmitting the first alert message to the first terminal includes: obtaining terminal identifications of terminals currently accessing a local area network; and transmitting the first alert message to the first terminal, if the obtained terminal identifications do not contain a terminal identification of the first terminal.

The method further includes: obtaining terminal identifications of terminals currently accessing the local area network; and transmitting the first alert message to a preset second terminal, if the obtained terminal identifications contain a terminal identification of the first terminal and the preset second terminal being in an active state.

In the embodiments of the disclosure, the physical characteristic data of the target object on the target device is obtained; the first alert message is transmitted to the first terminal, if the physical characteristic data of the target object does not match the pre-stored physical characteristic data of the target user in the preset matching condition. As such, when the other people is on the target device except for the target user, it would trigger the first terminal to transmit the first alert message, thereby to improve the safety of the target user's property.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for transmitting an alert message, comprising:
obtaining (101) physical characteristic data of a target object on a target device; and
transmitting (102) a first alert message to a first terminal, if a preset matching condition is not satisfied between the physical characteristic data of the target object and pre-stored physical characteristic data of a target user,
wherein said step of transmitting (102) a first alert message to a first terminal, if a preset matching condition is not satisfied between the physical characteristic data of the target object and pre-stored physical characteristic data of a target user, comprises:
determining a physical characteristic data range corresponding to the pre-stored physical characteristic data of the target user; and
transmitting the first alert message to the first terminal, if the physical characteristic data of the target object is not within the physical characteristic data range,
**characterized in that** the method further comprises:
obtaining motion data of the target user within a preset time period; and
adjusting the physical characteristic data range based on the motion data;
wherein said transmitting the first alert message to the first terminal, if the physical characteristic data of the target object is not within the physical characteristic data range, comprises:
transmitting the first alert message to the first terminal, if the physical characteristic data of the target object is not within the adjusted physical characteristic data range.

2. The method of claim 1, wherein said step of obtaining (101) physical characteristic data of a target object on a target device comprises:
detecting pressure, contact area and temperature, on the target device, of the target object; and
determining that the target object is a human and obtaining the physical characteristic data of the target object, if the pressure, contact area and temperature of the target object satisfy a preset physical characteristic condition.

3. The method of claim 1, further comprising:
transmitting a preset control command to a controlled device upon receiving an alarm confirmation message transmitted by the first terminal; or
transmitting a second alert message to a background server of a local security network upon receiving an alarm confirmation message transmitted by the first terminal.

4. The method of claim 3, wherein said transmitting a preset control command to a controlled device comprises:
transmitting a video recording command to a monitor device; or
transmitting a lock command to a security door and/or a security window.

5. A device for transmitting an alert message, comprising:
a first obtaining module (710) configured to obtain physical characteristic data of a target object on a target device; and
a first transmitting module (720) configured to transmit a first alert message to a first terminal, if a preset matching condition is not satisfied between the physical characteristic data of the target object and pre-stored physical characteristic data of a target user,
wherein the first transmitting module (720) comprises:
a determining sub-module (721) configured to determine a physical characteristic data range corresponding to the pre-stored physical characteristic data of the target user; and
a transmitting sub-module (722) configured to transmit the first alert message to the first terminal, if the physical characteristic data of the target object is not within the physical characteristic data range,
**characterized in that** the device further comprises:
a second obtaining module (730) configured to obtain motion data of the target user within a preset time period and adjust the physical characteristic data range based on the motion data;
wherein the first transmitting module (720) is configured to transmit the first alert message to the first terminal, if the physical characteristic data of the target object is not within the adjusted physical characteristic data range.

6. The device of claim 5, wherein the first obtaining module (710) is configured to:
detect pressure, contact area and temperature, on the target device, of the target object; and
determine the target object being a human and obtain the physical characteristic data of the target object, if the pressure, contact area and temperature of the target object satisfy a preset physical characteristic condition.

7. The device of claim 5, further comprising:
a second transmitting module (740) configured to transmit a preset control command to a controlled device upon receiving an alarm confirmation message transmitted by the first terminal; or
a third transmitting module (750) configured to transmit a second alert message to a background server of a local security network upon receiving an alarm confirmation message transmitted by the first terminal.

8. The device of claim 7, wherein the second transmitting module (740) is configured to transmit a video recording command to a monitor device or transmit a lock command to a security door and/or a security window.

9. The device of claim 5, wherein the first transmitting module (720) is configured to:
obtain terminal identifications of terminals currently accessing a local area network; and
transmit the first alert message to the first terminal, if the obtained terminal identifications does not contain a terminal identification of the first terminal;
wherein the first transmitting module is further configured to:
obtain terminal identifications of terminals currently accessing the local area network; and
transmit the first alert message to a preset second terminal, if the obtained terminal identifications contains a terminal identification of the first terminal and the second terminal being in an active state.

10. A device for transmitting an alert message, comprising:
a processor (820); and
a memory (804) for storing processor-executable instructions to implement the method according to any one of claims 1 to 4 when the instructions are executed by the processor.

## Patentansprüche

1. Verfahren zum Übermitteln einer Warnmeldung, umfassend:
das Erfassen (101) physikalischer Kenndaten eines Zielobjekts an einer Zielvorrichtung und
das Übermitteln (102) einer ersten Warnmeldung zu einem ersten Endgerät, falls eine voreingestellte Übereinstimmungsbedingung zwischen den physikalischen Kenndaten des Zielobjekts und zuvor gespeicherten physikalischen Kenndaten eines Zielbenutzers nicht erfüllt ist,
wobei der Schritt des Übermittelns (102) einer ersten Warnmeldung zu einem ersten Endgerät, falls eine voreingestellte Übereinstimmungsbedingung zwischen den physikalischen Kenndaten des Zielobjekts und zuvor gespeicherten physikalischen Kenndaten eines Zielbenutzers nicht erfüllt ist, umfasst:
Ermitteln eines physikalischen Kenndatenbereichs entsprechend den zuvor gespeicherten physikalischen Kenndaten des Zielbenutzers und
Übermitteln der ersten Warnmeldung an das erste Endgerät, falls die physikalischen Kenndaten des Zielobjekts nicht innerhalb des physikalischen Kenndatenbereichs liegen,
**dadurch gekennzeichnet, dass** das Verfahren ferner umfasst:
Erfassen von Bewegungsdaten des Zielbenutzer innerhalb eines voreingestellten Zeitraums und
Anpassen des physikalischen Kenndatenbereichs basierend auf den Bewegungsdaten,
wobei das Übermitteln der ersten Warnmeldung an das erste Endgerät, falls die physikalischen Kenndaten des Zielobjekts nicht innerhalb des physikalischen Kenndatenbereichs liegen, umfasst:
Übermitteln der ersten Warnmeldung an das erste Endgerät, falls die physikalischen Kenndaten des Zielobjekts nicht innerhalb des angepassten physikalischen Kenndatenbereichs liegen.

2. Verfahren nach Anspruch 1, wobei der Schritt des Erfassens (101) physikalischer Kenndaten eines Zielobjekts an einer Zielvorrichtung umfasst:
Messen von Druck, Kontaktfläche und Temperatur des Zielobjekts an der Zielvorrichtung und
Feststellen, dass das Zielobjekt ein Mensch ist, und Erfassen der physikalischen Kenndaten des Zielobjekts, falls der Druck, die Kontaktfläche und die Temperatur des Zielobjekts einem voreingestellten charakteristischen physikalischen Zustand entsprechen.

3. Verfahren nach Anspruch 1, ferner umfassend:
Übermitteln eines voreingestellten Steuerbefehls zu einer gesteuerten Vorrichtung bei Empfang einer vom ersten Endgerät übermittelten Warnbestätigungsmeldung, oder
Übermitteln einer zweiten Warnmeldung an einen Hintergrundserver eines lokalen Sicherheitsnetzwerks bei Empfang einer vom ersten Endgerät übermittelten Warnbestätigungsmeldung.

4. Verfahren nach Anspruch 3, wobei das Übermitteln eines voreingestellten Steuerbefehls zu einer gesteuerten Vorrichtung umfasst:
Übermitteln eines Videoaufzeichnungsbefehls zu einer Überwachungsvorrichtung oder
Übermitteln eines Sperrbefehls zu einer Sicherheitstür und/oder einem Sicherheitsfenster.

5. Vorrichtung zum Übermitteln einer Warnmeldung, umfassend:
ein erstes Erfassungsmodul (710), das derart gestaltet ist, dass es physikalische Kenndaten eines Zielobjekts an einer Zielvorrichtung erfasst, und
ein erstes Übermittlungsmodul (720), das derart gestaltet ist, dass es eine erste Warnmeldung zu einem ersten Endgerät übermittelt, falls eine voreingestellte Übereinstimmungsbedingung zwischen den physikalischen Kenndaten des Zielobjekts und zuvor gespeicherten physikalischen Kenndaten eines Zielbenutzers nicht erfüllt ist,
wobei das erste Übermittlungsmodul (720) umfasst:
ein Ermittlungs-Untermodul (721), das derart gestaltet ist, dass es einen physikalischen Kenndatenbereich entsprechend den zuvor gespeicherten physikalischen Kenndaten des Zielbenutzers ermittelt, und
ein Übermittlungs-Untermodul (722), das derart gestaltet ist, dass es die erste Warnmeldung an das erste Endgerät übermittelt, falls die physikalischen Kenndaten des Zielobjekts nicht innerhalb des physikalischen Kenndatenbereichs liegen,
**dadurch gekennzeichnet, dass** die Vorrichtung ferner umfasst:
ein zweites Erfassungsmodul (730), das dazu konfiguriert ist, Bewegungsdaten des ersten Zielbenutzers innerhalb eines voreingestellten Zeitraums zu erfassen und den physikalischen Kenndatenbereich basierend auf den Bewegungsdaten anzupassen,
wobei das erste Übermittlungsmodul (720) dazu konfiguriert ist, die erste Warnmeldung an das erste Endgerät zu übermitteln, falls die physikalischen Kenndaten des Zielobjekts nicht innerhalb des angepassten physikalischen Kenndatenbereichs liegen.

6. Vorrichtung nach Anspruch 5, wobei das erste Erfassungsmodul (710) dazu konfiguriert ist,
Druck, Kontaktfläche, und Temperatur des Zielobjekts an der Zielvorrichtung zu messen und
festzustellen, dass das Zielobjekt ein Mensch ist, und die physikalischen Kenndaten des Zielobjekts zu erfassen, falls der Druck, die Kontaktfläche und die Temperatur des Zielobjekts einem voreingestellten charakteristischen physikalischen Zustand entsprechen.

7. Vorrichtung nach Anspruch 5, ferner umfassend:
ein zweites Übermittlungsmodul (740), das dazu konfiguriert ist, bei Empfang einer vom ersten Endgerät übermittelten Warnbestätigungsmeldung einen voreingestellten Steuerbefehl zu einer gesteuerten Vorrichtung zu übermitteln, oder
ein drittes Übermittlungsmodul (750), das dazu konfiguriert ist, bei Empfang einer vom ersten Endgerät übermittelten Warnbestätigungsmeldung eine zweite Warnmeldung an einen Hintergrundserver eines lokalen Sicherheitsnetzwerks zu übermitteln.

8. Vorrichtung nach Anspruch 7, wobei das zweite Übermittlungsmodul (740) dazu konfiguriert ist, einen Videoaufzeichnungsbefehl zu einer Überwachungsvorrichtung zu übermitteln oder einen Sperrbefehl zu einer Sicherheitstür und/oder einem Sicherheitsfenster zu übermitteln.

9. Vorrichtung nach Anspruch 5, wobei das erste Übermittlungsmodul (720) dazu konfiguriert ist,
Endgerätekennungen von Endgeräten, die gegenwärtig auf ein lokales Netzwerk zugreifen, zu erfassen, und
eine erste Warnmeldung an ein erstes Endgerät zu übermitteln, falls die erfassten Endgerätekennungen keine Endgerätekennung des ersten Endgeräts enthalten,
wobei das erste Übermittlungsmodul ferner dazu konfiguriert ist,
Endgerätekennungen von Endgeräten, die gegenwärtig auf ein lokales Netzwerk zugreifen, zu erfassen, und
die erste Warnmeldung an ein voreingestelltes zweites Endgerät zu übermitteln, falls die erfassten Endgerätekennungen eine Endgerätekennung des ersten Endgeräts und des zweiten Endgeräts enthalten, die sich im aktiven Zustand befinden.

10. Vorrichtung zum Übermitteln einer Warnmeldung, umfassend:
einen Prozessor (820) und
einen Speicher (804) zum Speichern von prozessorausführbaren Befehlen zur Umsetzung des Verfahrens nach einem der Ansprüche 1 bis 4, wenn die Befehle durch den Prozessor ausgeführt werden.

## Revendications

1. Procédé pour transmettre un message d'alerte, comprenant :
l'obtention (101) de données de caractéristique physique d'un objet cible sur un dispositif cible ; et
la transmission (102) d'un premier message d'alerte à un premier terminal, si une condition de concordance prédéfinie n'est pas satisfaite entre les données de caractéristique physique de l'objet cible et des données de caractéristique physique pré-stockées d'un utilisateur cible,
dans lequel ladite étape de transmission (102) d'un premier message d'alerte à un premier terminal, si une condition de concordance prédéfinie n'est pas satisfaite entre les données de caractéristique physique de l'objet cible et des données de caractéristique physique pré-stockées d'un utilisateur cible, comprend :
la détermination d'une plage de données de caractéristique physique correspondant aux données de caractéristique physique pré-stockées de l'utilisateur cible ; et
la transmission du premier message d'alerte au premier terminal, si les données de caractéristique physique de l'objet cible ne sont pas dans la plage de données de caractéristique physique,
**caractérisé en ce que** le procédé comprend en outre :
l'obtention de données de mouvement de l'utilisateur cible dans une période de temps prédéfinie ; et
l'ajustement de la plage de données de caractéristique physique sur la base des données de mouvement ;
dans lequel ladite transmission du premier message d'alerte au premier terminal, si les données de caractéristique physique de l'objet cible ne sont pas dans la plage de données de caractéristique physique, comprend :
la transmission du premier message d'alerte au premier terminal, si les données de caractéristique physique de l'objet cible ne sont pas dans la plage de données de caractéristique physique ajustée.

2. Procédé selon la revendication 1, dans lequel ladite étape d'obtention (101) de données de caractéristique physique d'un objet cible sur un dispositif cible comprend :
la détection d'une pression, d'une zone de contact et d'une température, sur le dispositif cible, de l'objet cible ; et
la détermination que l'objet cible est un humain et l'obtention des données de caractéristique physique de l'objet cible, si la pression, la zone de contact et la température de l'objet cible satisfont à une condition de caractéristique physique prédéfinie.

3. Procédé selon la revendication 1, comprenant en outre :
la transmission d'une commande de contrôle prédéfinie à un dispositif contrôlé lors de la réception d'un message de confirmation d'alarme transmis par le premier terminal ; ou
la transmission d'un second message d'alerte à un serveur d'arrière-plan d'un réseau de sécurité locale lors de la réception d'un message de confirmation d'alarme transmis par le premier terminal.

4. Procédé selon la revendication 3, dans lequel ladite transmission d'une commande de contrôle prédéfinie à un dispositif contrôlé comprend :
la transmission d'une commande d'enregistrement vidéo à un dispositif de surveillance ; ou
la transmission d'une commande de verrouillage à une porte de sécurité et/ou une fenêtre de sécurité.

5. Dispositif pour transmettre un message d'alerte, comprenant :
un premier module d'obtention (710) configuré pour obtenir des données de caractéristique physique d'un objet cible sur un dispositif cible ; et
un premier module de transmission (720) configuré pour transmettre un premier message d'alerte à un premier terminal, si une condition de concordance prédéfinie n'est pas satisfaite entre les données de caractéristique physique de l'objet cible et des données de caractéristique physique pré-stockées d'un utilisateur cible,
dans lequel le premier module de transmission (720) comprend :
un sous-module de détermination (721) configuré pour déterminer une plage de données de caractéristique physique correspondant aux données de caractéristique physique pré-stockées de l'utilisateur cible ; et
un sous-module de transmission (722) configuré pour transmettre le premier message d'alerte au premier terminal, si les données de caractéristique physique de l'objet cible ne sont pas dans la plage de données de caractéristique physique,
**caractérisé en ce que** le dispositif comprend en outre :
un second module d'obtention (730) configuré pour obtenir des données de mouvement de l'utilisateur cible dans une période de temps prédéfinie et ajuster la plage de données de caractéristique physique sur la base des données de mouvement ;
dans lequel le premier module de transmission (720) est configuré pour transmettre le premier message d'alerte au premier terminal, si les données de caractéristique physique de l'objet cible ne sont pas dans la plage de données de caractéristique physique ajustée.

6. Dispositif selon la revendication 5, dans lequel le premier module d'obtention (710) est configuré pour :
détecter une pression, une zone de contact et une température, sur le dispositif cible, de l'objet cible ; et
déterminer que l'objet cible est un humain et obtenir les données de caractéristique physique de l'objet cible, si la pression, la zone de contact et la température de l'objet cible satisfont à une condition de caractéristique physique prédéfinie.

7. Dispositif selon la revendication 5, comprenant en outre :
un deuxième module de transmission (740) configuré pour transmettre une commande de contrôle prédéfinie à un dispositif contrôlé lors de la réception d'un message de confirmation d'alarme transmis par le premier terminal ; ou
un troisième module de transmission (750) configuré pour transmettre un second message d'alerte à un serveur d'arrière-plan d'un réseau de sécurité locale lors de la réception d'un message de confirmation d'alarme transmis par le premier terminal.

8. Dispositif selon la revendication 7, dans lequel le deuxième module de transmission (740) est configuré pour transmettre une commande d'enregistrement vidéo à un dispositif de surveillance ou transmettre une commande de verrouillage à une porte de sécurité et/ou une fenêtre de sécurité.

9. Dispositif selon la revendication 5, dans lequel le premier module de transmission (720) est configuré pour :
obtenir des identifications de terminal de terminaux accédant actuellement à un réseau local ; et
transmettre le premier message d'alerte au premier terminal, si les identifications de terminal obtenues ne contiennent pas une identification de terminal du premier terminal ;
dans lequel le premier module de transmission est en outre configuré pour :
obtenir des identifications de terminal de terminaux accédant actuellement au réseau local ; et
transmettre le premier message d'alerte à un second terminal prédéfini, si les identifications de terminal obtenues contiennent une identification de terminal du premier terminal et que le second terminal est dans un état actif.

10. Dispositif pour transmettre un message d'alerte, comprenant :
un processeur (820) ; et
une mémoire (804) pour stocker des instructions exécutables par processeur pour mettre en oeuvre le procédé selon l'une quelconque des revendications 1 à 4 lorsque les instructions sont exécutées par le processeur.
